# EUROPEAN PATENT SPECIFICATION

(11) **EP 4 667 326 B1**
(45) Date of publication and mention of the grant of the patent: **02.12.2026**
(21) Application number: 25180332.6
(22) Date of filing: 03.06.2025
(51) Int. Cl.: B62D 25/02, B60J 5/10, B62D 25/04, B62D 35/00

(54) **BODY REAR STRUCTURE**
HINTERE KAROSSERIESTRUKTUR
STRUCTURE ARRIÈRE DE CARROSSERIE

(30) Priority: 19.06.2024 JP 2024098826
(43) Date of publication of application: 24.12.2025
(73) Proprietor: MAZDA MOTOR CORPORATION, Hiroshima 730-8670 (JP)
(72) Inventor: Ioka, Tadashi, Aki-gun, Hiroshima, 730-8670 (JP); Nakata, Akihiro, Aki-gun, Hiroshima, 730-8670 (JP); Bessho, Masaaki, Aki-gun, Hiroshima, 730-8670 (JP); Okamoto, Satoshi, Aki-gun, Hiroshima, 730-8670 (JP)
(74) Representative: Lorenz Seidler Gossel Part. mbB

(56) References cited:
- WO-A1-2023/185583
- JP-A- 2012 126 326
- US-A1- 2020 001 935

## Description

The present invention relates to a body rear structure including: a lid body that openably/closably covers a body rear surface opening; and a rear pillar that constitutes a part of a body side surface portion of a body rear portion along left and right edge portions of the lid body.

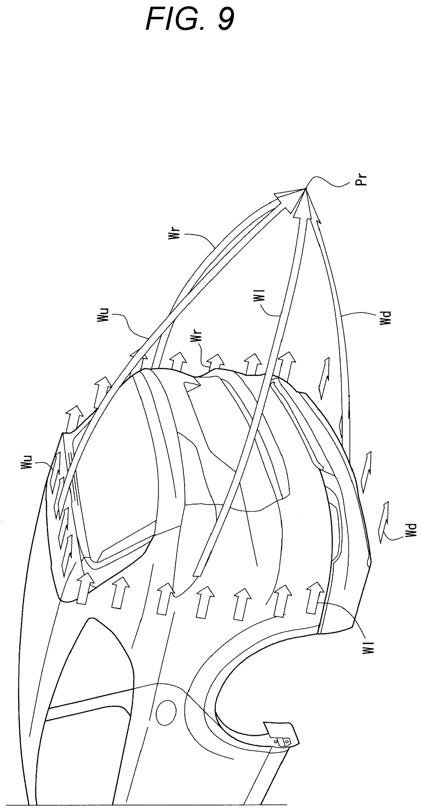

In general, as illustrated in FIG. 9, during travel of a vehicle, convergence of travel winds Wu, Wd, Wl, Wr that respectively flow rearward along surfaces of a body roof, a portion under body floor, and left and right body side surface portions and flow away from body rear end portions thereof to a single point Pr in a manner to define a rear end of a spindle shape at a position behind a body with a predetermined distance therefrom is effective from a perspective of reducing air resistance during the travel of the vehicle.

For example, in order to significantly deflect the travel winds Wl, Wr inward in a vehicle width direction in the left and right body side surface portions, as illustrated in FIG. 9, it is important to deflect the travel winds Wl, Wr, which have been separated from rear end portions of the body side surface portions, inward in the vehicle width direction. In order to realize this, the document as exemplified in JP2012-126326A has been proposed.

In a rear pillar provided to the side surface portion of the body rear portion in JP2012-126326A, a pillar duct is formed as an air blowing path, through which a part of a body side surface flow taken in from a front side of the rear pillar is discharged to a rear side of the rear pillar, at a height position equal to or higher than a belt line of the body, and a discharge flow from the pillar duct is used as an air curtain. In this way, the body side surface portion flow that has flowed to the rear end portion of the body side surface portion along it is suppressed from being caught in a body rear surface (generating turbulence) when being separated from the rear end portion of the body side surface portion, and consequently is deflected inward in the vehicle width direction.

In order to do so, as proposed in the Japanese Patent Application No. 2024-070525 as the prior application, the present applicant has found to extend the pillar duct disclosed in JP2012-126326A described above to a position behind the rear pillar until reaching an outer side in the vehicle width direction of the edge portion of the lid body, to provide a wing-like portion having an outer surface that continues rearward from an outer surface of the rear pillar, and to thereby be able to significantly deflect the body side surface flow inward in the vehicle width direction.

In the inventions according to JP2012-126326A and the prior application, a wind blowing path body and a part of a duct forming portion for forming the pillar duct in the rear pillar are formed by a garnish made of a resin. The garnish made of the resin is disposed on an outer surface of the side surface portion of the body rear portion to form a decorative surface of the rear pillar. A further D pillar is known from WO 2023/185583

However, on the outer surface of the side surface portion of the body rear portion in which the resin garnish is disposed, a boundary portion (a parting line) between the resin garnish and a body outer plate member such as a rear fender panel disposed adjacent to upper and lower sides thereof appears along a front-rear direction.

Thus there is a possibility that a design property may be impaired.

An object of the invention is to provide a body rear structure capable of securing a design property of a body rear portion side surface portion while significantly deflecting a post-side surface flow separated from a rear end portion of a body side surface portion inward in a vehicle width direction.

The invention is characterized by including: a lid body that openably/closably covers a body rear surface opening; a rear pillar, in which a rear end portion is adjacent to each of left and right edge portions of the lid body via a parting line, and which forms a part of a body side surface portion; a pillar duct portion that introduces and discharges a travel wind, which flows along a quarter window provided in the body side surface portion located on a front side of the rear pillar, to rear of the rear pillar; and a side spoiler that is fixed to an outer surface of each of the left and right edge portions of the lid body, in that in the rear pillar, an inner panel, an outer panel whose main surface portion is located on an outer side in a vehicle width direction of a rear end portion of the quarter window, and a gutter panel forming a rain gutter in each of left and right side portions of the body rear surface opening are joined to form a closed cross-sectional portion that extends along respective one of the edge portions of the lid body, that the pillar duct portion includes: a front opening that is opened to be oriented to front of a vehicle in a front edge portion of the outer panel; a rear opening that is opened to be oriented to the rear of the vehicle in a rear portion of the outer panel or the gutter panel; and a duct body that connects these front and rear openings and extends the closed cross-sectional portion of the rear pillar in a front-rear direction, and the side spoiler includes a wing-like portion having an outer surface that smoothly continues from a rear end portion of an outer surface of the outer panel via the parting line on a vehicle width outer side of a flow path, through which a discharge wind from the pillar duct portion flows.

According to the configuration, a post-side surface flow that flows to the rear of the vehicle through the wing-like portion behind the rear pillar is deflected to be attracted inward in a plan view by the discharge wind that has been discharged from the pillar duct portion provided in the rear pillar. In this way, it is possible to install the pillar duct portion without impairing external design of the side surface portion in a body rear portion while reducing air resistance.

As an aspect of the invention, the outer surface of the wing-like portion may be provided to smoothly continue rearward from the rear end portion of the outer surface of the outer panel constituting a part of the body side surface portion, and may be formed to have a larger rear throttle angle than a rear throttle angle of the outer surface of the outer panel in a horizontal cross section.

According to the configuration, during travel of the vehicle, the post-side surface flow, which has been separated from the rear end portion of the outer surface of the wing-like portion, is made to flow toward the discharge wind, which is discharged rearward from the pillar duct portion, (to the vehicle width inner side). In this way, in cooperation with the discharge wind that exerts an ejector effect, the post-side surface flow can further be deflected inward. Therefore, it is possible to reduce the air resistance during the travel of the vehicle.

As an aspect of the invention, the rear throttle angle of the wing-like portion may be set within a range of 25 degrees or greater and 29 degrees or less.

As described above, when the rear throttle angle of the outer surface of the wing-like portion is set to 25 degrees or greater, the post-side surface flow can reliably flow toward the discharge wind, which is discharged rearward from the flow path, (to the vehicle width inner side). Thus, the post-side surface flow can significantly be deflected inward in the vehicle width direction. In addition, as described above, since the rear throttle angle of the outer surface of the wing-like portion is set to 29 degrees or less, a protrusion length of the wing-like portion, which is provided independently of the outer panel, to protrude rearward and to the vehicle width inner side in a cantilevered shape can be suppressed. Thus, it is possible to secure external design of the body rear portion and to reduce a load applied to the wing-like portion.

According to the invention, it is possible to provide the body rear structure capable of securing a design property of the body rear portion side surface portion while significantly deflecting the post-side surface flow separated from the rear end portion of the body side surface portion inward in the vehicle width direction.

### Brief Description of Drawings:

FIG. 1 is an external view in which a body rear portion of a vehicle including a body rear structure in the present embodiment is seen obliquely from behind and left.
FIG. 2 is a left view of the body rear portion of the vehicle illustrated in FIG. 1.
FIG. 3 is a cross-sectional view illustrating a main section along a line A-A in FIG. 2.
FIG. 4 is an enlarged cross-sectional view illustrating the main section in FIG. 3.
FIG. 5 is an exploded perspective view of a pillar duct portion in which a part of an outer panel is indicated by an imaginary line and a main section of a rear pillar is viewed from an outer side in a vehicle width direction.
FIG. 6(a) is a perspective cross-sectional view in which a cross section of the main section along a line B-B in FIG. 5 as viewed from inside of a fitting convex portion, and (b) is a cross-sectional view illustrating the main section along a line C-C in FIG. 5.
FIG. 7(a) is a left view illustrating a main section of a body rear structure in a modified example in an enlarged manner, and (b) is a cross-sectional view illustrating the main section along a line D-D in (a).
FIG. 8 is a graph illustrating a simulation result after effectiveness of the body rear structure in the present embodiment and an embodiment associated therewith is verified.
FIG. 9 is an external view of an ideal situation in which travel winds away from rear end portions of a roof, a portion under a body floor, and left and right body side surface portions gather at a predetermined point away from a body to the rear, and in which the body rear portion of the vehicle is obliquely seen from behind and the left.

Hereinafter, a description will be made on an embodiment of the invention with reference to the drawings.

In the drawings, an arrow F indicates a body front direction, an arrow U indicates a body up direction, an arrow OUT indicates an outer side in a vehicle width direction, and an arrow IN indicates an inner side in the vehicle width direction. In addition, a left-right direction of a body is set on the basis of an occupant who is seated on a driver's seat. Furthermore, left and right side surface portions 3 in a body rear portion of a vehicle V in the present embodiment have substantially bilaterally symmetrical shapes. Thus, hereinafter, a description will mainly be made on the basis of the side surface portion 3 on a body left side.

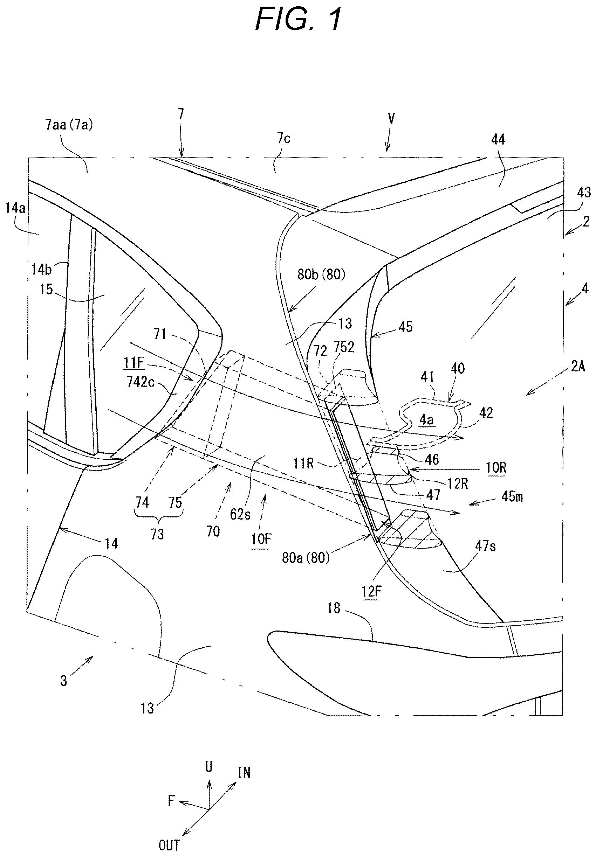

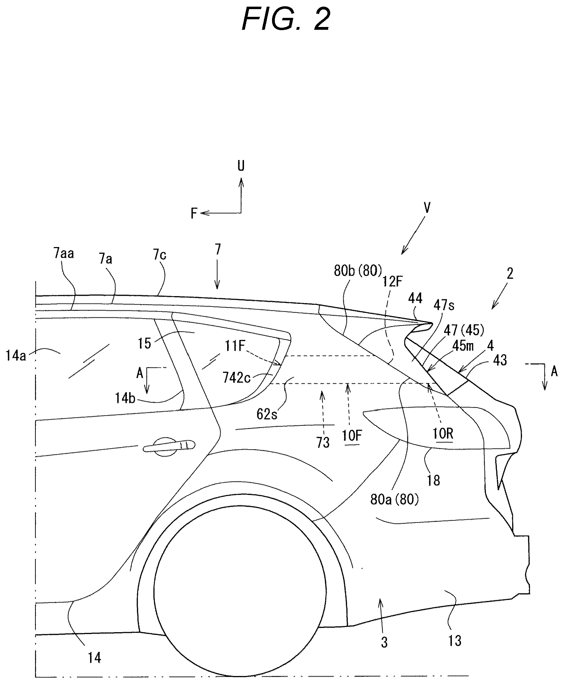

As illustrated in FIGs. 1 and 2, the vehicle V that has a body rear structure in the present embodiment is a hatchback-type passenger vehicle that has a lift gate 4 of a flip-up type in a body rear surface portion 2.

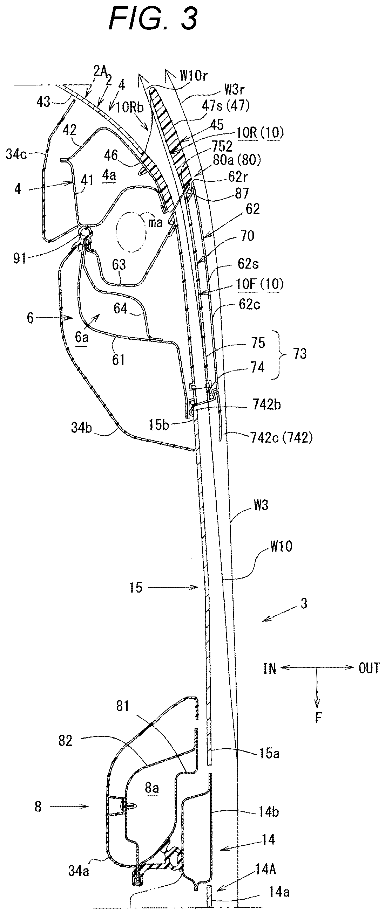

As illustrated in FIG. 3, an intermediate pillar 8 and a rear pillar 6 are provided on a side of each of the left and right side surface portions 3 in the body rear portion of the vehicle V in the present embodiment. These pillars 8, 6 each extend in an up-down direction in a manner to constitute a part of the body side surface portion 3, are disposed away from each other in a vehicle front-rear direction, and support a rear portion of a roof 7 (see FIGs. 1 and 2) that covers an upper portion of a cabin.

As illustrated in FIGs. 1 and 2, the roof 7 includes: a pair of left and right roof side rails 7a extending in the front-rear direction; a rear header (not illustrated) that couples rear end portions of the pair of roof side rails 7a; a substantially rectangular roof panel 7c that covers an entire area between the pair of roof side rails 7a from above; and the like.

The above-described roof side rail 7a is formed by joining and fixing an outer roof side rail 7aa and an inner roof side rail (not illustrated), and forms a roof side closed cross section (not illustrated), which extends in the vehicle front-rear direction, therebetween.

The above-described rear header (not illustrated) defines an upper end side of a body rear surface opening 2A of the cabin (a baggage compartment) provided in the body rear surface portion 2 and, in cooperation with the above-described roof panel 7c, forms a rear header closed cross-sectional portion (not illustrated) that extends in the vehicle width direction.

As illustrated in FIG. 3, the intermediate pillar 8 is formed by fixedly joining an outer intermediate pillar 81 and an inner intermediate pillar 82, and an intermediate pillar closed cross section 8a that extends in the vehicle up-down direction is formed therebetween.

As illustrated in FIGs. 1 and 2, a door opening 14A in which a rear door 14 is disposed is formed between the intermediate pillar 8 (a quarter pillar, a C pillar) and a center pillar (a B pillar) (not illustrated) that is disposed away therefrom to the front. A front end of the rear door 14 is pivotally supported by the center pillar in a manner to be able to open/close the door opening 14A. In an upper portion of the rear door 14, rear door glass 14a is provided, and a door sash 14b is provided at a rear end thereof.

In addition, as illustrated in FIGs. 1 to 3, a quarter window 15 (also referred to as "quarter glass 15") is attached between the intermediate pillar 8 and the rear pillar 6 (a D pillar) described above. The quarter window 15 extends substantially linearly along the front-rear direction, and is provided to the body side surface portion 3 in front of the rear pillar 6, that is, between the rear pillar 6 and the door sash 14b of the rear door 14.

As illustrated in the horizontal cross section in FIG. 3, a front end portion 15a of the quarter window 15 is disposed near the outer side in the vehicle width direction of the outer intermediate pillar 81. Here, as illustrated in FIG. 3, when the rear door 14 is closed, the front end portion 15a of the quarter window 15 is located near and behind the door sash 14b, which is located in a rear end portion of the rear door glass 14a of the rear door 14, and outer surfaces thereof are disposed to smoothly continue in the front-rear direction.

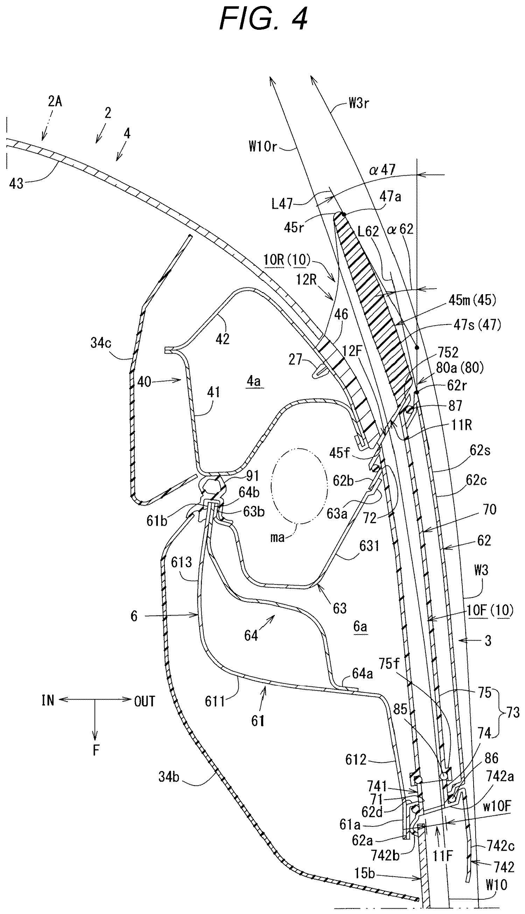

As illustrated in FIG. 4 in particular of FIGs. 3 and 4, the rear pillar 6 forms each of left and right side portions (only the left one is illustrated) of the body rear surface opening 2A, and includes an inner panel 61, an outer panel 62, a gutter panel 63, and a rear pillar reinforcement 64.

The inner panel 61 includes: an intermediate portion 611 that extends along the vehicle width direction; a front portion 612 that extends in the front direction from an outer end in the vehicle width direction of the intermediate portion 611; and a rear portion 613 that extends in the rear direction from an inner end in the vehicle width direction of the intermediate portion 611, and extends such that a horizontal cross section forms a crank shape.

The outer panel 62 of the rear pillar 6 is located on the outer side in the vehicle width direction of the inner panel 61. A front end flange portion 62a of the outer panel 62 and a front end flange portion 61a of the inner panel 61 are joined to each other. A rear end flange portion 62b of the outer panel 62 of the rear pillar 6 is hemmed (that is, folded back) in a V-shape such that a rear end portion (a rear-side tip portion) thereof protrudes inward in the vehicle width direction to the front.

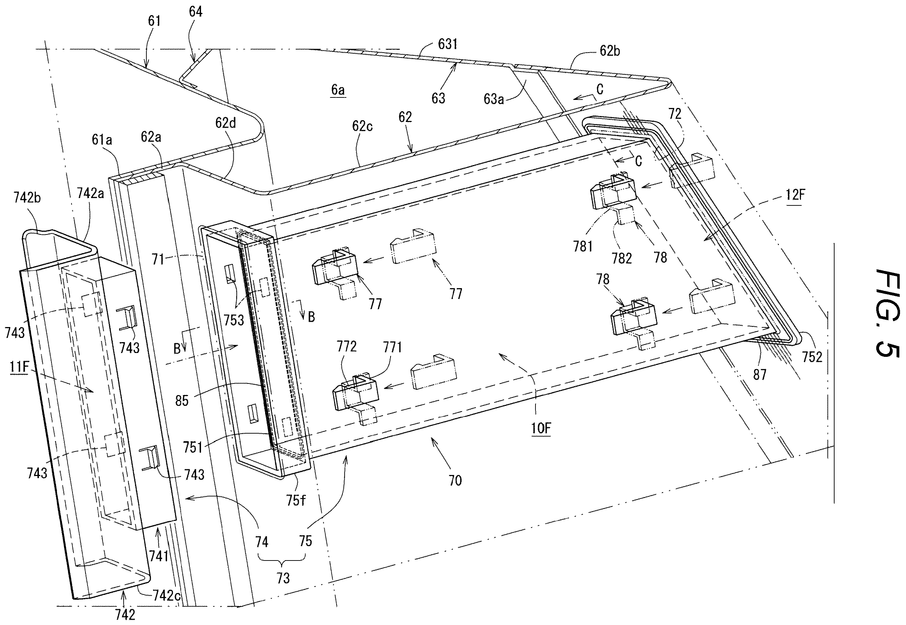

As illustrated in FIGs. 4 and 5, in a main surface portion 62c of the outer panel 62 of the rear pillar 6, an outer surface 62s serves as a decorative surface of the rear pillar 6 and is formed as a part of a rear fender panel 13 serving as an outer surface of the side surface portion 3 in the body rear portion (see FIGs. 1 and 2).

As illustrated in FIG. 4, a front portion of the outer panel 62 of the rear pillar 6 includes: a front end step portion 62d that is bent inward in the vehicle width direction from a front end of the main surface portion 62c toward a rear end portion 15b of the quarter window 15; and the front end flange portion 62a extending forward from an inner end in the vehicle width direction of the front end step portion 62d.

The front end step portion 62d of the outer panel 62 of the rear pillar 6 is located near the rear side of the rear end portion 15b of the quarter window 15. The front end flange portion 62a of the rear pillar 6 is located near the vehicle width inner side of the rear end portion 15b of the quarter window 15, and is joined to the front end flange portion 61a of the inner panel 61 as described above.

Here, as illustrated in the horizontal cross section in FIG. 3, an outer surface of the outer panel 62 of the rear pillar 6 is located slightly inward in the vehicle width direction from the outer surface of the door sash portion 14b when the rear door 14 is closed. Accordingly, in a horizontal cross-sectional view, the quarter window 15 is provided to be gently inclined inward in the vehicle width direction to the rear from the front end portion 15a to the rear end portion 15b.

As illustrated in FIG. 4, the gutter panel 63 of the rear pillar 6 is substantially formed in a U-shape, a horizontal cross section of which is gradually expanded to the rear, to form a rain gutter (a wet edge) in the side portion of the body rear surface opening 2A.

In detail, the gutter panel 63 includes an outer surface 631 on the outer side in the vehicle width direction. The outer surface 631 of the gutter panel 63 extends while being inclined substantially linearly in the vehicle front-rear direction such that a rear portion thereof including a rear outer end flange portion 63a located in a rear outer end portion is located outward in the vehicle width direction to the rear, and is formed such that an inclination thereof is substantially the same as an inclination of the rear end flange portion 62b of the outer panel 62 in the vehicle front-rear direction.

The rear outer end flange portion 63a on the outer surface 631 of the gutter panel 63 and the rear end flange portion 62b of the outer panel 62 are joined to each other. In this way, the outer surface 631 of the gutter panel 63 and the rear end flange portion 62b of the outer panel 62 extend to continue on the same straight line.

A rear inner end flange portion 63b that protrudes rearward is provided at a rear end on the inner side in the vehicle width direction of the outer surface 631 of the gutter panel 63. The rear inner end flange portion 63b, a rear end flange portion 61b of the inner panel 61 and a rear end flange portion 64b, which will be described below, of the rear pillar reinforcement 64 are joined in a manner to sandwich the rear end flange portion 64b between the flange portions 63b and 61b. Here, a weather strip 91, which is press-fitted to an inner panel 41 on an edge portion 40 at the time when the lift gate 4 is closed, is attached to these three flange portions 61b, 64b, 63b.

In the rear pillar 6, the inner panel 61, the outer panel 62, and the gutter panel 63 described above are joined to form a closed cross-sectional portion 6a as a hollow portion that extends in the up-down direction along the edge portion 40, which will be described below, of the lift gate 4.

The rear pillar reinforcement 64 is located between the inner panel 61 and the outer panel 62 in the vehicle width direction. As described above, the rear end flange portion 64b is joined to the rear end flange portion 61b of the inner panel 61 and the rear inner end flange portion 63b of the gutter panel 63 in the manner to be sandwiched therebetween, and a front end flange portion 64a is joined to the intermediate portion 611 of the inner panel 61. In this way, a closed cross-sectional portion that extends in the up-down direction is also formed between the rear pillar reinforcement 64 and the inner panel 61.

As illustrated in FIGs. 3 and 4, in the rear pillar 6, a pillar duct portion 70 is provided to introduce and discharge a travel wind W10, which flows along the quarter window 15 located in front of the rear pillar 6, to the rear of the rear pillar 6. As illustrated in FIGs. 4 and 5, the pillar duct portion 70 includes a front opening 71, a rear opening 72, and a duct body 73.

As illustrated in FIGs. 4 and 5, the front opening 71 and the rear opening 72 described above are provided to penetrate the outer panel 62 of the rear pillar 6 in the front-rear direction so as to communicate the inside and outside of the closed cross-sectional portion 6a of the rear pillar 6.

In detail, the front opening 71 is formed in the front end step portion 62d of the outer panel 62 so as to be oriented to the vehicle front side. In addition, the rear opening 72 is formed in the rear end flange portion 62b of the outer panel 62 so as to be oriented to the vehicle rear side.

The duct body 73 connects the front opening 71 and the rear opening 72 and extends in the front-rear direction in the closed cross-sectional portion 6a of the rear pillar 6.

In detail, the duct body 73 extends in the front-rear direction along the main surface portion 62c so as to be located on the outer side of the inner panel 61 and the gutter panel 63 in the vehicle width direction in the closed cross-sectional portion 6a of the rear pillar 6. Furthermore, as illustrated in FIGs. 1 and 2, the duct body 73 is assembled to the outer panel 62 at a position behind the quarter window 15 of the body side surface portion 3 at substantially the same height as the quarter window 15.

As illustrated in FIG. 5, when assembly of the duct body 73 to the outer panel 62 is described in detail, in an outer surface in the vehicle width direction of the duct body 73, a side surface engagement portion 77 that engages with the main surface portion 62c of the outer panel 62 from the inner side in the vehicle width direction protrudes in the main surface portion 62c of the outer panel 62. The main surface portion 62c of the outer panel 62 includes a side surface engaged portion 78 that is engaged with the side surface engagement portion 77. The side surface engagement portion 77 and the side surface engaged portion 78 are illustrated only in FIG. 5.

The side surface engagement portion 77 includes: a base portion 771 that protrudes toward the outer panel 62 from the outer surface in the vehicle width direction of the duct body 73; and a tip protruding portion 772 that protrudes forward from a tip portion of the base portion 771 so as to be engageable with the side surface engaged portion 78 from the rear. Meanwhile, the side surface engaged portion 78 is formed in a hat shape by a gate-shaped portion 781 penetrating in the front-rear direction and a pair of upper and lower flange portions 782 protruding from both upper and lower end portions of the gate-shaped portion 781 in mutually different directions in the up-down direction. In the side surface engaged portion 78, the flange portion 782 is joined to each of the upper and lower sides of the inner surface of the main surface portion 62c of the outer panel 62 in a vehicle side view, the portions corresponding to the side surface engagement portion 77 being separated from each other by an adhesive.

In this way, the side surface engagement portion 77 is formed to be engageable with the side surface engaged portion 78 so as to be inserted into an inner space penetrating the side surface engaged portion 78 in the front-rear direction from the rear. The duct body 73 is assembled to the outer panel 62 by engaging the side surface engaged portion 78 with the side surface engagement portion 77.

As illustrated in FIG. 5, in the present embodiment, the duct body 73 includes: a duct body front end member 74 located in a front end portion of the duct body 73; and a duct body main body member 75 constituting portions other than the front end portion of the duct body 73. The duct body 73 is not limited to being formed by two members as in the present embodiment, and may be formed entirely of a single member, or may be formed by including three or more members that can be joined to each other.

The duct body main body member 75 is formed in a flat rectangular tubular shape that is long in the up-down direction and the front-rear direction with respect to the vehicle width direction and penetrates the inside in the front-rear direction. In a front end portion of the duct body main body member 75, a fitting concave portion 75f is provided that is opened forward in a manner to allow fitting of the duct body front end member 74.

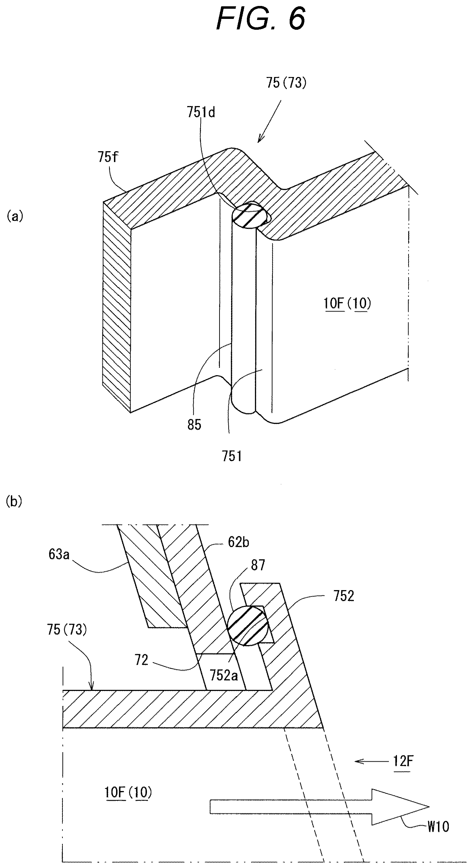

As described above, the fitting concave portion 75f of the duct body main body member 75 is formed to be slightly larger than a rear portion of the fitting concave portion 75f over an entire circumference. In this way, as illustrated in FIGs. 5 and 6(a), in a boundary portion between an inner surface of the fitting concave portion 75f and the inner surface of the rear portion of the fitting concave portion 75f of the duct body main body member 75, a body member side step portion 751 that faces forward is formed around an entire circumference of the duct body main body member 75.

As illustrated in FIGs. 4 and 5, the duct body front end member 74 includes a fitting convex portion 741 and a wind guiding portion 742 located on the front side of the fitting convex portion 741. The fitting convex portion 741 protrudes rearward with respect to the wind guiding portion 742 so as to be fitted into the fitting concave portion 75f. Furthermore, the fitting convex portion 741 is formed in a rectangular tubular shape penetrating in the front-rear direction, and has a length in the front-rear direction corresponding to the fitting concave portion 75f in the front end portion of the duct body main body member 75.

As illustrated in FIGs. 5 and 6(a), the body member side step portion 751 includes a seal member 85 (a water stop member) that can be pressed against a rear end of the fitting convex portion 741 fitted in the fitting concave portion 75f. In detail, as illustrated in FIG. 6(a), the body member side step portion 751 is provided with a concave portion 751d that is recessed rearward for fitting and holding the seal member 85 over an entire circumference of the body member side step portion 751. The seal member 85 is formed in an annular shape so as to be fitted over the entire circumference of the concave portion 751d provided in the body member side step portion 751. In this way, the rear end portion of the duct body front end member 74 is pressed against the body member side step portion 751 via the seal member 85 in a state of being fitted to the fitting concave portion 75f of the duct body main body member 75.

As illustrated in FIG. 5, an engagement convex portion 743 is provided on outer surfaces on the inner and outer sides of the fitting convex portion 741 in the vehicle width direction, while being provided with an engagement concave portion 753 on the inner surface of the fitting concave portion 75f in a portion opposing the engagement convex portion 743 of the fitted fitting convex portion 741. In a state of being fitted to the fitting concave portion 75f in the front end portion of the duct body main body member 75, in the fitting convex portion 741, the engagement convex portion 743 and the engagement concave portion 753 are engaged with each other. The engagement convex portion 743 and the engagement concave portion 753 are illustrated only in FIG. 5.

As illustrated in FIGs. 4 and 5, the wind guiding portion 742 includes a base portion 742a, an inner protrusion piece 742b protruding forward from an inner end in the vehicle width direction of the base portion 742a, and an outer protrusion piece 742c protruding forward from an outer end in the vehicle width direction of the base portion.

The base portion 742a of the wind guiding portion 742 is formed in a plate shape having a plate thickness in the front-rear direction, and is formed integrally with the fitting convex portion 741 provided on the rear side. Furthermore, in the base portion 742a, a front duct inlet portion 11F is provided to penetrate in the front-rear direction together with the fitting convex portion 741 and be opened in the front-rear direction in a manner to be able to introduce the travel wind W10, which flows along the quarter window 15 provided in the body side surface portion 3 in front of the rear pillar 6.

As illustrated in FIG. 4, a width w10F in the horizontal cross section of a front duct 10F, in particular, the width w10F in the front duct inlet portion 11F is set to approximately 34 mm within a range of 6 mm or greater and 40 mm or less.

The outer protrusion piece 742c is formed as a wind guide plate that guides the travel wind W10, which flows along the quarter window 15, from the outer side in the vehicle width direction in the vicinity of the front side of the front duct inlet portion 11F. The outer protrusion piece 742c as the wind guide plate is also used as a decorative plate.

In detail, as illustrated in FIGs. 1 and 2, the outer protrusion piece 742c is formed in a blade shape by imitating a rear edge frame body along a rear edge portion of an outer frame along an upper edge portion and the rear edge portion of the quarter window 15, and as illustrated in FIG. 4, covers the front duct inlet portion 11F in an eave shape from the outer side in the vehicle width direction to ensure appearance of a periphery thereof.

As illustrated in FIG. 5, the base portion 742a of the wind guiding portion 742 is formed to be slightly larger than the fitting convex portion 741 for an entire periphery, and an outer peripheral portion thereof is formed in a step shape with respect to the fitting convex portion 741. As illustrated in FIG. 4, a rear surface of the outer peripheral portion of the base portion 742a of the wind guiding portion 742 is formed to be pressed against a peripheral edge portion of the front opening 71 formed in the front end step portion 62d of the outer panel 62 via a seal member 86 (only illustrated in FIG. 4).

Meanwhile, as illustrated in FIGs. 4 and 5, a rear end portion of the duct body 73, that is, a rear end portion of the duct body main body member 75 is inserted into the rear opening 72 provided in the rear end flange portion 62b of the outer panel 62, and is held by a peripheral edge of the rear opening 72. In the rear end portion of the duct body 73, a front duct outlet portion 12F, from which the travel wind W10 flowing through the duct body 73 is discharged to the rear, is opened to be oriented to the vehicle rear side. In this way, inside the duct body 73, the front duct 10F (a pillar duct) that communicates between the front duct inlet portion 11F and the front duct outlet portion 12F in the vehicle front-rear direction is provided.

As illustrated in FIGs. 5 and 6(b), on an outer surface of the rear end portion of the duct body 73, a flange portion 752 that bulges in a brim shape over an entire periphery of the duct body 73 is provided. The flange portion 752 is formed to be pressed against a peripheral edge portion of the rear opening 72 of the rear end flange portion 62b from the rear side via a seal member 87.

As illustrated in FIG. 6(b), in an outer circumferential portion of a front surface of the flange portion 752, a concave portion 752a, into which the seal member 87 is fitted and held, is provided for an entire circumference. The seal member 87 is formed in an annular shape so as to be fitted into the concave portion 752a, which is provided in the outer circumferential portion of the front surface of the flange portion 752, for the entire circumference. In this way, in the rear end portion of the duct body 73, the flange portion 752 in the state of being fitted into the rear opening 72 is pressed against a circumferential edge of the rear opening 72 of the rear end flange portion 62b via the seal member 87.

Next, a description will be made on an example of a procedure of assembling the above-described duct body 73 to the outer panel 62. First, the duct body main body member 75 before fitting of the duct body front end member 74 is inserted from the rear into the closed cross-sectional portion 6a of the rear pillar 6 through the rear opening 72 while keeping the same posture as a posture after the assembly to the outer panel 62 (see FIG. 5).

When the flange portion 752 is inserted until abutting an edge portion of the rear opening 72 of the rear end flange portion 62b via the seal member 87 (see FIG. 6 (a)), the rear end portion of the duct body main body member 75 is held by the peripheral edge of the rear opening 72, the front end portion thereof is fitted into the front opening 71, and thereby it is held by a peripheral edge portion of the front opening 71 (see FIG. 5). Furthermore, the side surface engagement portion 77 provided on an outer surface of the duct body main body member 75 is engaged with the side surface engaged portion 78 on the outer panel 62 side from behind.

Next, as illustrated in FIG. 5, the fitting convex portion 741 of the duct body front end member 74 is fitted into the fitting concave portion 75f of the duct body main body member 75 through the front opening 71 on the outer front side of the closed cross-sectional portion 6a of the rear pillar 6. As a result, the fitting convex portion 741 is locked in a state of being fitted into the fitting concave portion 75f when the rear end surface thereof is pressed against the body member side step portion 751 via the seal member 85, and the engagement convex portion 743 and the engagement concave portion 753 are engaged with each other.

At the time, the rear surface of the base portion 742a of the wind guiding portion 742 is pressed against the peripheral edge portion of the front opening 71 formed in the front end step portion 62d of the outer panel 62 via the seal member 86 (see FIG. 4).

By the above-described procedure, the duct body 73 can be assembled to the outer panel 62, and can be provided in the closed cross-sectional portion 6a of the rear pillar 6.

Next, a description will be made on the lift gate 4.

The lift gate 4 is configured to be able to open/close the body rear surface opening 2A. As illustrated in FIG. 1, this lift gate 4 includes the metallic inner panel 41 (see FIG. 4), a metallic outer panel 42, rear window glass 43, a roof spoiler 44 that is made of a synthetic resin, a side spoiler 45 that is made of the synthetic resin, and the like, and is formed in a substantially curved shape as a whole to be located upward to the front in the vehicle side view (see FIG. 2). The outer panel 42 constitutes an outer surface of a region other than an upper end portion of the lift gate 4. An inner lamp portion of a rear combination lamp 18, a rear wiper mechanism, and the like are attached thereto.

As illustrated in FIG. 4, the edge portion 40 on each of the left and right sides of the lift gate 4 is formed by fixedly joining the inner panel 41 and the outer panel 42, and a closed cross section 4a that extends in the vehicle up-down direction is provided between these panels 41, 42.

In the horizontal cross-sectional view, when the lift gate 4 is closed, an outer portion in the vehicle width direction of the inner panel 41 of the lift gate 4 is substantially formed in a U-shape that is gradually expanded to the front in a manner to oppose the gutter panel 63 from the rear side with a movable region ma of a gas spring being interposed therebetween. Here, the gas spring is a spring that uses a reaction force of compressed gas to be able to assist with lifting and lowering of the lift gate 4 when it is opened/closed.

As illustrated in FIG. 3, trims 34a, 34b, 34c as interior members are respectively provided on the cabin inner side of the intermediate pillar 8, the rear pillar 6, and the edge portions 40 of the lift gate 4 described above.

As illustrated in FIG. 1, in cooperation with the outer panel 42, the roof spoiler 44 constitutes a part of an outer surface of the lift gate 4 in a manner to cover the rear window glass 43 and upper end portions of the left and right side spoilers 45. The roof spoiler 44 is formed in a substantially horizontal shape, and bulges rearward from a rear end portion of the roof panel 7c in the vehicle side view.

As illustrated in FIG. 1, in a vehicle back view, each of left and right end portions of the roof spoiler 44 is formed in a shape that is substantially curved downward along an extension line of respective one of left and right end portions of the roof side rail 7a. Then, as illustrated in FIG. 2, in a rear end portion of the roof spoiler 44 that extends in the vehicle width direction, a center portion is disposed at the rearmost position in comparison with the left and right edge portions.

As illustrated in FIGs. 1, 2, and 4, the side spoiler 45 is formed as a unit or integrally by resin molding to have a vertically long shape along the edge portion 40 as a whole, and is provided over a substantially entire length in the up-down direction on both sides of the rear window glass 43.

Here, as illustrated in FIG. 4, the rear pillar 6 coincides with the edge portion 40 and the side spoiler 45 of the lift gate 4 in the vehicle width direction such that a rear end portion 62r forms a side parting line 80a (a slight clearance) with a wing-like portion 47 of the side spoiler 45 provided on the outer side in the vehicle width direction of the edge portion 40 when the lift gate 4 is closed (see FIG. 4).

In the present embodiment, as illustrated in FIGs. 1 and 2, the duct body 73 and a duct forming portion 45m, which will be described below, of the side spoiler 45 are provided at the same height as each other, and as illustrated in the horizontal cross section in FIG. 4, a rear surface portion of the flange portion 752 of the duct body 73 and a front surface portion 45f of the side spoiler 45 oppose each other via the side parting line 80a.

This side parting line 80a forms a part of a parting line 80 that forms a boundary between the lift gate 4 in a closed state and the body provided with the body rear surface opening 2A, and, as illustrated in FIGs. 1 and 2, extends in the up-down direction in a manner to be visually recognizable in the vehicle side view and located downward to the rear together with both left and right end portions of parting lines 80b extending in the vehicle width direction formed in a boundary portion between the roof 7 and the roof spoiler 44.

In detail, there are cases where the side parting line 80a is visually recognizable in the vehicle side view and where it is visually recognizable in the vehicle back view according to a vehicle type in general. In the vehicle in the present embodiment, a so-called side parting line that is visually recognizable in the vehicle side view is formed.

Furthermore, as illustrated in the horizontal cross section in FIG. 4, the flange portion 752 of the duct body 73 is formed to be inclined with respect to the front-rear direction in a manner to be located inward in the vehicle width direction to the front and thereby extend substantially continuous on the same straight line as the rear end flange portion 62b of the outer panel 62 of the rear pillar 6. Meanwhile, as illustrated in the horizontal cross section of FIG. 4, the front surface portion 45f of the side spoiler 45 is formed in parallel with the rear end flange portion 62b of the outer panel 62 of the rear pillar 6.

In this way, even when the side parting line 80a that extends in the up-down direction is formed in a boundary portion between the outer panel 62 of the rear pillar 6 and the side spoiler 45, appearance of the vehicle in the present embodiment in the vehicle side view is improved by suppressing visual recognition of an internal structure in the body rear portion from the body outer side via the side parting line 80a.

As illustrated in FIGs. 1 and 2, the duct forming portion 45m is provided in a region in the up-down direction between the above-described side spoiler 45 in the vertically long shape. As illustrated in FIGS. 1 and 4, the side spoiler 45 includes a base portion 46 that forms an inner surface in the vehicle width direction over the entire length in the up-down direction including the duct forming portion 45m, and the wing-like portion 47 that is located on the outer side in the vehicle width direction from the base portion 46 and forms an outer surface in the vehicle width direction.

The duct forming portion 45m of the side spoiler 45 is provided with a rear duct 10R that communicates between the base portion 46 and the wing-like portion 47 in the front-rear direction. In detail, the rear duct 10R is formed in a vertically long shape that communicates the side spoiler 45 in the front-rear direction by an outer surface in the vehicle width direction of the base portion 46 and an inner surface in the vehicle width direction of the wing-like portion 47 in the duct forming portion 45m.

As illustrated in FIG. 4, the front surface portion 45f of the side spoiler 45 is provided with a rear duct inlet portion 11R that takes in the travel wind W10 discharged from the front duct outlet portion 12F of the duct body 73. A rear surface portion 45r of the duct forming portion 45m in the side spoiler 45 is provided with a rear duct outlet portion 12R, from which the travel wind W10 flowing through the side spoiler 45 (that is, the rear duct 10R) is discharged. In the rear duct 10R, the rear duct inlet portion 11R and the rear duct outlet portion 12R communicate with each other.

The front duct 10F and the rear duct 10R have substantially the same width (duct width) in the vehicle width direction and the same width in the up-down direction, and the rear duct inlet portion 11R and the front duct outlet portion 12F oppose each other via the side parting line 80a. In this way, the front duct 10F and the rear duct 10R are substantially continuous via the side parting line 80a.

That is, in mutual cooperation of the front duct 10F and the rear duct 10R, the side surface portion 3 of the body rear portion is substantially formed with a single duct 10 that extends substantially continuously over the duct body 73 and the side spoiler 45 and in which the front duct inlet portion 11F and the rear duct outlet portion 12R communicate with each other.

As illustrated in FIG. 4, the base portion 46 of the side spoiler 45 is formed such that the horizontal cross section is curved inward in the vehicle width direction to the rear along an outer surface of the outer panel 42 in each of the left and right edge portions 40 of the lift gate 4, and is fixed to the outer panel 42 via a grommet 26.

As illustrated in the horizontal cross section in FIG. 4, the wing-like portion 47 of the side spoiler 45 protrudes rearward from a rear end of the base portion 46. Furthermore, an outer surface 47s of the wing-like portion 47 that forms an outer surface of the side spoiler 45 smoothly continues rearward from the outer surface 62s of the outer panel 62 of the rear pillar 6, which forms a part of the outer surface of the side surface portion 3 in the body rear portion via the side parting line 80a.

In the present embodiment, the outer panel 62 of the rear pillar 6 is smoothly formed such that at least a rear portion of the outer surface 62s is gradually located inward in the vehicle width direction to the rear, and the outer surface 47s of the wing-like portion 47 is smoothly formed over the entire length in the front-rear direction in a manner to be gradually located inward in the vehicle width direction to the rear and thereby smoothly continue from the outer surface 62s of the outer panel 62 of such a rear pillar 6.

Further, as illustrated in the horizontal cross section in FIG. 4, a rear end portion 47a of the outer surface 47s of the wing-like portion 47 in the side spoiler 45 is formed such that a tangent line L47 is inclined with respect to the front-rear direction, in a manner to be located inward in the vehicle width direction to the rear. An angle of the tangent line L47 of the rear end portion 47a of the outer surface 47s in such a wing-like portion 47 with respect to the front-rear direction is referred to as a rear throttle angle α47 (also referred to as a "rear end angle") in the horizontal cross section of the outer surface of the side spoiler 45.

Similarly, as illustrated in the horizontal cross section in FIG. 4, the rear end portion 62r of the outer surface 62s of the outer panel 62 of the rear pillar 6 is also formed such that a tangent line L62 is inclined with respect to the front-rear direction, in a manner to be located inward in the vehicle width direction to the rear in the horizontal cross-sectional view. An angle of the tangent line L62 of the rear end portion 62r of the outer surface 62s of the outer panel 62 in such a rear pillar 6 with respect to the front-rear direction is referred to as a rear throttle angle α62 in the horizontal cross section of the outer surface 62s of the outer panel 62 of the rear pillar 6.

Then, the outer surface 47s of the wing-like portion 47 is formed to have the rear throttle angle α47 that is larger than the rear throttle angle α62 of the outer surface 62s of the outer panel 62 of the rear pillar 6 in the horizontal cross section.

In the present embodiment, the rear throttle angle α47 of the outer surface 47s of the wing-like portion 47 in the horizontal cross section is set to 25 degrees within a range of 25 degrees or greater and 29 degrees or less, while the rear throttle angle α62 of the outer surface 62s of the outer panel 62 of the rear pillar 6 in the horizontal cross section is 19 degrees.

As illustrated particularly in FIG. 3 of FIGs. 1 to 6, the body rear structure in the present embodiment described above includes: the lift gate 4 (a lid body) that openably/closably covers the body rear surface opening 2A; the rear pillar 6 in which the rear end portion 62r is adjacent to the left and right edge portions of the lift gate 4 via the side parting line 80a (a parting line), and which constitutes a part of the body side surface portion 3; the pillar duct portion 70 that introduces and discharges the travel wind W10, which flows along the quarter window 15 provided in the body side surface portion 3 on the front side of the rear pillar 6, to the rear of the rear pillar 6; and the side spoiler 45 that is fixed to the outer surface of each of the left and right edge portions 40 of the lift gate 4.

In the rear pillar 6, the inner panel 61, the outer panel 62, the main surface portion 62c of which is located on the outer side in the vehicle width direction of the rear end portion 15b of the quarter window 15, and the gutter panel 63, which forms the rain gutter in each of the left and right side portions of the body rear surface opening 2A, are joined to form the closed cross-sectional portion 6a extending along the edge portion 40 of the lift gate 4.

The pillar duct portion 70 includes: the front opening 71 that is opened to be oriented to the front of the vehicle in a front edge portion of the outer panel 62; the rear opening 72 that is opened to be oriented to the rear of the vehicle in the rear portion of the outer panel 62 or the gutter panel 63; and the duct body 73 that connects the front and rear openings 71, 72 (the front opening 71 and the rear opening 72) and extends the closed cross-sectional portion 6a of the rear pillar 6 in the front-rear direction.

The side spoiler 45 includes the wing-like portion 47 having the outer surface 47s that smoothly continues from the rear end portion 62r of the outer surface 62s of the outer panel 62 via the parting line 80a on the vehicle width outer side of the rear duct 10R as a flow path, through which the discharge wind W10 from the pillar duct portion 70 (the front duct 10F) flows.

According to the configuration, a side surface flow W3r (hereinafter also referred to as a "post-side surface flow W3r") (see FIGs. 3 and 4) flowing to the rear of the vehicle through the wing-like portion 47 behind the rear pillar 6 is drawn inward in a plan view by the travel wind discharged from the duct 10, which includes the front duct 10F as the pillar duct provided in the rear pillar 6, in this example, a travel wind W10r (hereinafter also referred to as a "post-duct flow W10r") discharged from the rear duct outlet portion 12R, and the post-side surface flow W3r can thereby be deflected inward in the plan view.

Furthermore, since the front duct 10F is installed in the manner to penetrate the rear pillar 6 in the front-rear direction, the presence of the front duct 10F as well as the front duct inlet portion 11F and the front duct outlet portion 12F as the inlet and the outlet thereof can be made unnoticeable from a body outer surface.

Therefore, it is possible to secure external design of the side surface portion 3 in the body rear portion while reducing the air resistance during the travel of the vehicle.

In detail, as illustrated in FIG. 4, the outer surface 62s of the outer panel 62 of the rear pillar 6 and the outer surface 47s of the wing-like portion 47 of the side spoiler 45 continue in the front-rear direction via the side parting line 80a. Accordingly, during the travel of the vehicle, the side surface flow W3 can be made to flow substantially continuously from at least the front end of the outer surface 62s of the outer panel 62 of the rear pillar 6 to the rear end portion 47a of the outer surface 47s of the wing-like portion 47, from which the side surface flow W3 is separated.

Meanwhile, the post-duct flow W10r (see FIGs. 3 and 4) has a higher flow rate than the side surface flow W3, and can exert an ejector effect (a suctioning effect) to attract the post-side surface flow W3r, which has flowed through the rear end portion 47a of the wing-like portion 47, inward in the plan view. Such an ejector effect can promote inward deflection of the post-side surface flow W3r in the plan view.

Therefore, the air resistance can be reduced by significantly deflecting the post-side surface flow W3r, which has been separated from the rear end portion of the body side surface portion 3 during the travel of the vehicle, inward in the vehicle width direction.

As illustrated in FIGs. 1, 2, 4, and 5, in the pillar duct portion 70 of the present embodiment, the duct body 73 is installed in the closed cross-sectional portion 6a of the rear pillar 6. Thus, as illustrated in FIG. 2, in a portion, which corresponds to the duct body 73, of the side surface portion 3 of the body rear portion, the duct body 73 can be provided such that a part thereof does not appear on the outer surface of the side surface portion 3 in the body rear portion.

More specifically, for example, in the case where, in order to form the duct body 73, a part thereof is formed by using a resinous pillar garnish or the like that constitutes a part of the body outer surface, the portion, which corresponds to the duct body 73, an outer surface of the pillar garnish appears on the outer surface of the side surface portion 3 in the body rear portion. Accordingly, in each of upper and lower end portions, a parting line is formed to extend in the front-rear direction along a boundary portion from the rear fender panel 13 located on each of the upper and lower sides of the pillar garnish. In such a case, when the parting line is a parting line that is not intended in terms of design, the number of line elements in the side surface portion 3 of the body rear portion is increased, which possibly produces complicated impression.

Meanwhile, since the side surface portion 3 in the body rear portion of the present embodiment is configured to install the duct body 73 in the closed cross-sectional portion 6a of the rear pillar 6, in the outer surface of the side surface portion 3, the outer surface 62s can be formed continuously from a belt line to the roof side rail 7 along the up-down direction without interposing the parting line therebetween by the outer panel 62 of the rear pillar 6, which is shared with the rear fender panel 13 as described above.

In this way, as illustrated in FIG. 2, it is possible to secure the external design of the side surface portion 3 in the body rear portion by eliminating the complicated impression by reducing the parting line of the side surface portion 3 in the body rear portion as much as possible. Thus, such simple and elegant design using a streamlined shape of the rear fender panel 13 can be secured. In addition, there is no need for a devise to stabilize mutual alignment when the pillar garnish, which separates the rear fender panel 13 in the up-down direction, is provided, or the like.

In the rear body structure of the present embodiment, in order to obtain the ejector effect by the post-duct flow W10r, the travel wind W10 flowing through the front duct 10F and the rear duct 10R is discharged as the post-duct flow W10r, which is discharged from the rear duct outlet portion 12R, while securing a sufficient flow rate.

In detail, regarding this point, as illustrated in FIG. 3, the quarter window 15 is provided in the body side surface portion 3 in front of the rear pillar 6, and a long air guide section for introducing the travel wind W10 into the front duct 10F can be secured by this quarter window 15. Therefore, as illustrated in FIGs. 3 and 4, the front duct 10F that is provided in the duct body 73 can take in the travel wind along the quarter window 15 while securing the sufficient flow rate.

Furthermore, the front duct 10F and the rear duct 10R are separately provided in the duct body 73 (the body side) and the side spoiler 45 (the lift gate 4 side), respectively, via the side parting line 80a. However, it is configured that the front duct 10F and the rear duct 10R substantially continue in the vehicle front-rear direction and that the travel wind W10 introduced into the front duct inlet portion 11F of the front duct 10F is discharged as the post-duct flow W10r rearward in the vehicle from the rear duct outlet portion 12R of the rear duct 10R. In this way, it is possible to discharge the post-duct flow W10r from the rear duct 10R while securing the sufficient flow rate. Therefore, it is possible to reliably obtain the ejector effect by the post-duct flow W10r.

As an aspect of the invention, as illustrated in FIG. 4, the body rear structure in the present embodiment is characterized in that the outer surface 47s of the wing-like portion 47 is provided in the manner to smoothly continue rearward from the rear end portion 62r of the outer surface 62s of the outer panel 62 of the rear pillar 6, which forms a part of the body side surface portion 3, and is formed to have the rear throttle angle α47, which is larger than the rear throttle angle α62, in the horizontal cross section of the outer surface 62s of the outer panel 62 of the rear pillar 6.

According to the configuration, the post-side surface flow W3r, which is separated from the rear end portion 47a of the outer surface 47s of the wing-like portion 47, flows toward the post-duct flow W10r, which is discharged rearward from the rear duct 10R, (to the vehicle width inner side). In this way, in cooperation with the post-duct flow W10r that exerts the ejector effect, the post-side surface flow W3r can further be deflected inward. Therefore, it is possible to reduce the air resistance during the travel of the vehicle.

As an aspect of the invention, as illustrated in FIG. 4, the rear throttle angle α47 of the outer surface 47s of the wing-like portion 47 is set within the range of 25 degrees or greater and 29 degrees or less.

According to the configuration, by setting the rear throttle angle α47 of the outer surface 47s of the wing-like portion 47 to 25 degrees or greater, the post-side surface flow W3r can reliably flow toward the post-duct flow W10r, which is discharged rearward from the rear duct 10R, (toward the vehicle width inner side), and in cooperation with the post-duct flow W10r that exerts the ejector effect, the post-side surface flow W3r can significantly be deflected inward in the vehicle width direction. Meanwhile, by setting the rear throttle angle α47 of the outer surface 47s of the wing-like portion 47 to be equal to or less than 29 degrees, it is possible to suppress the wing-like portion 47 from protruding rearward and to the vehicle width inner side and thus can secure external design of the body rear portion.

As an aspect of the invention, as illustrated in FIG. 4, the width w10F of particularly the front duct inlet portion 11F of the duct 10 (the front duct 10F and the rear duct 10R) in the horizontal cross section is set within the range of 6 mm or greater and 40 mm or less.

According to the configuration, while the rear throttle angle α47 of the wing-like portion 47 is set within the above-described range, the width w10F of the duct 10 in the horizontal cross section is set within the above-described range. In this way, it is possible to suppress enlargement caused by the rearward protrusion of the side spoiler 45, which constitutes the rear duct 10R, while taking the desired flow rate of the travel wind W10 into the duct 10.

In correspondence between the configuration in the invention and the above-described embodiment, the lid body corresponds to the lift gate 4. Similarly, the parting line corresponds to the side parting line 80a, and the flow path corresponds to the rear duct 10R. However, the invention is not limited only to the configuration in the above-described embodiment, and many embodiments can be obtained.

For example, in the invention, the shape of the wing-like portion, which includes the rearward protrusion length, the rear throttle angle of an outer surface of the wing-like portion in the horizontal cross section are not limited to those in the shape of the wing-like portion 47 in the above-described embodiment, and can be changed to those in another mode within the scope included in the technical idea of the invention.

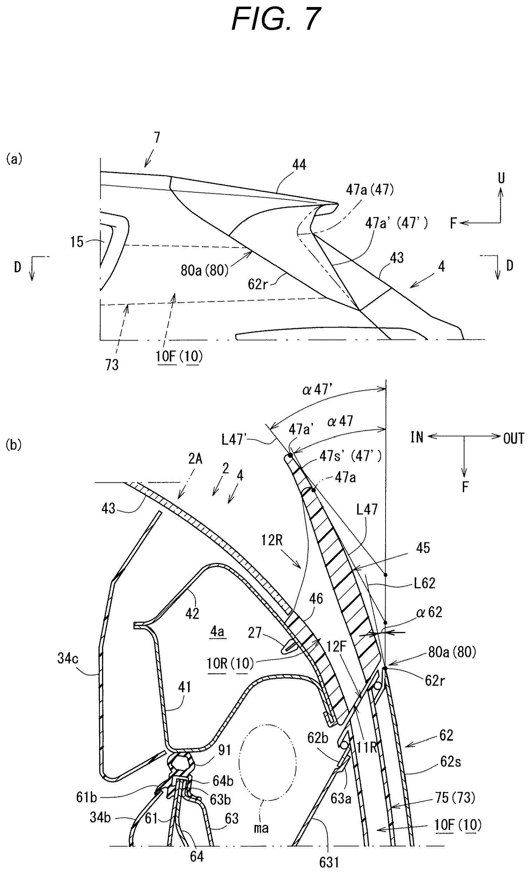

FIG. 7(a) is a side view of a body rear structure according to a modified example that includes a wing-like portion 47' whose rear throttle angle α47' is larger than the rear throttle angle α47 of the wing-like portion 47 in the above-described embodiment, and FIG. 7(b) is a horizontal cross-sectional view of the body rear structure according to the modified example corresponding to the main section in FIG. 4.

As described above, the rear throttle angle α47 of the wing-like portion 47 in the above-described embodiment is set to 25 degrees. Meanwhile, as illustrated in FIGs. 7(a), (b), the rear throttle angle α47' of the wing-like portion 47' in the modified example indicates an angle in the front-rear direction of a tangent line L47' of a rear end portion 47a' of an outer surface 47s' of the wing-like portion 47' and is set to 29 degrees. That is, the wing-like portion 47' in the modified example is formed to protrude farther rearward and inward in the vehicle width direction than the wing-like portion 47 in the above-described embodiment.

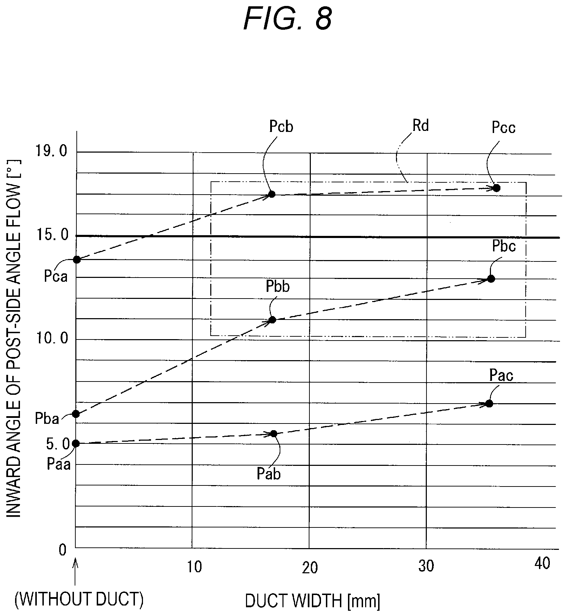

FIG. 8 is a graph illustrating a simulation result of the inward deflection angle of the post-side surface flow W3r, which has flowed through a rear end portion of the side surface portion 3 in the body rear portion, during the travel of the vehicle in the horizontal cross-sectional view is verified for each of rear body structures in inventive examples 1 to 4, which are described below and included in the invention, conventional examples 1 to 4, and a comparative example.

In detail, FIG. 8 is a graph illustrating a relationship between the horizontal width w10F of the duct 10 and the inward angle of the post-side surface flow W3r according to presence or absence of the duct 10 (the front duct 10F and the rear duct 10R) and, when the duct 10 is provided, the two types (25 degrees and 29 degrees) of the rear throttle angle. That is, a horizontal axis in FIG. 8 indicates the horizontal width w10F of the duct 10, and a vertical axis in FIG. 8 indicates the inward angle of the post-side surface flow W3r.

Here, a region Rd that is surrounded by two-dot chain lines in FIG. 8 is a region including the result that is obtained when the simulation is performed with the rear body structure in the invention, that is, a target region. In addition, it is assumed that 15 degrees is an ideal value of the inward deflection angle.

In the conventional example 1 that was set without the duct 10 and the wing-like portion 47, the result indicated by a plot Paa in FIG. 8 was obtained. In the conventional examples 2, 3, in each of which the duct 10 was provided in the conventional example 1, the results indicated by plots Pab, Pac in FIG. 8 were obtained with the horizontal width w10F of the duct 10 being set to 17 mm and 34 mm, respectively. That is, as illustrated in FIG. 8, in each of the conventional examples 2, 3 corresponding to the plots Pab, Pac, respectively, the inward deflection angle of the post-side surface flow W3r was improved from that in the conventional example 1 corresponding to the plot Paa in FIG. 8. However, in all of the conventional examples 1 to 3, it was less than 8 degrees and fell out of a range of the target region Rd.

In the conventional example 4 in which the duct 10 was not provided and the rear throttle angle of the wing-like portion 47 was set to 25 degrees, the result indicated by a plot Pba in FIG. 8 was obtained. That is, as illustrated in FIG. 8, in the conventional example 4 corresponding to the plot Pba, the inward deflection angle of the post-side surface flow W3r was less than 8 degrees and fell out of the range of the region Rd.

The inventive examples 1, 2 are inventive examples, each of which is set to have the duct 10 in the above-described conventional example 4 corresponding to the plot Pba. In detail, the inventive examples 1, 2 are each based on the body rear structure in the above-described embodiment, and the rear throttle angle α47 of the outer surface 47s of the wing-like portion 47 in the horizontal cross section is set to 25 degrees. In these inventive examples 1, 2, the results indicated by plots Pbb, Pbc in FIG. 8 were obtained with the horizontal width w10F of the duct 10 being set to 17 mm and 34 mm, respectively. That is, as illustrated in FIG. 8, in each of the inventive examples 1, 2 corresponding to the plots Pbb, Pbc, respectively, the inward deflection angle of the post-side surface flow W3r was improved from that in the above-described conventional example 4 corresponding to the plot Pba, and exceeded 8 degrees.

In the comparative example in which the duct 10 was not provided and the rear throttle angle of the wing-like portion 47 was set to 29 degrees, the result indicated by a plot Pca in FIG. 8 was obtained. That is, as illustrated in FIG. 8, in the comparative example corresponding to the plot Pca, the inward deflection angle of the post-side surface flow W3r exceeded 8 degrees.

However, it was found that, when the case where the duct 10 was not provided as in the comparative example, in order to obtain the result equivalent to, that is, the inward deflection angle of the post-side surface flow W3r equivalent to the inventive examples 1, 2 in which the rear throttle angle α47 of the wing-like portion 47 was set to 25 degrees, the rear throttle angle of the wing-like portion had to be set to 29 degrees as the larger angle. That is, the wing-like portion as in the comparative example has to protrude longer to the rear and to the inner side in the vehicle width direction.

Furthermore, the inventive examples 3, 4 are inventive examples, each of which is set to have the duct 10 in the above-described comparative example corresponding to the plot Pca. In detail, the inventive examples 3, 4 are each based on the body rear structure in the above-described modified example (see FIGs. 7(a) and (b)), and as illustrated in FIG. 7(b), the rear throttle angle α47' of the outer surface 47s' of the wing-like portion 47' in the horizontal cross section is set to 29 degrees.

In these inventive examples 3, 4, the results indicated by plots Pcb, Pcc in FIG. 8 were obtained with the horizontal width w10F of the duct 10 being set to 17 mm and 34 mm, respectively. That is, as illustrated in FIG. 8, in each of the inventive examples 3, 4 on the plots Pcb, Pcc, the inward deflection angle of the post-side surface flow W3r was improved from that in the comparative example and exceeded 15 degrees as the ideal value.

From the results in FIG. 8 described above, it could be confirmed that the post-side surface flow W3r could be deflected significantly inward in the vehicle width direction while the rearward protrusion lengths of the wing-like portions 47, 47' were suppressed by the cooperation of the wing-like portions 47, 47', the rear throttle angle of each of which was set to be larger than that in the conventional example, and the post-duct flow W10r during the travel of the vehicle. That is, it could be confirmed that the reduction in the air resistance during the travel of the vehicle and the external design of the body rear portion could simultaneously be achieved.

Furthermore, from the results of the plots Pbb, Pbc, Pcb, Pcc in FIG. 8, it could be confirmed that the inward deflection angle of the post-side surface flow W3r was improved when the horizontal width w10F of the duct 10 was 34 mm in comparison with 17 mm.

In this simulation, it is assumed that the vehicle is traveling at a constant vehicle speed of 140 kph. In the case where the horizontal width w10F of the duct 10 was set to 17 mm under this setting, a wind speed at the front duct inlet portion 11F was 40 kph, and a wind speed at the rear duct outlet portion 12R was 55 kph. Meanwhile, when the horizontal width w10F of the duct 10 was 34 mm, the wind speed at each of the front duct inlet portion 11F and the rear duct outlet portion 12R was 76 kph.

From such results, it is considered that the wider horizontal width w10F of the duct 10 increased a volume of the wind that could be taken into the duct 10 from the front duct inlet portion 11F, improved the flow rate of the travel wind through the duct 10, and consequently improved the flow rate of the post-duct flow W10r. That is, the result matched the consideration result that the improvement in the speed of the post-duct flow W10r improved the function (the ejector effect) of pulling the post-side surface flow W3r inward in the vehicle width direction.

In the invention, the base portion is not essential as long as the side spoiler is configured to include the wing-like portion. For example, by using the ejector effect by the travel wind, which has been discharged to the rear of the vehicle from the front duct 10F in the pillar duct portion 70, the post-side surface flow W3r separated from the rear end portion 47a of the wing-like portion 47 of the side spoiler 45 can be deflected inward.

### [Reference Signs List]

2A body rear surface opening
3 body side surface portion
4 lift gate (lid body)
6 rear pillar
6a closed cross-sectional portion of rear pillar
10R rear duct (flow path)
15 quarter window
15b rear end portion of quarter window
40 left and right edge portions of lift gate
45 side spoiler
47, 47' wing-like portion
47s, 47s' outer surface of wing-like portion
61 inner panel of rear pillar
62 outer panel of rear pillar
62b rear end flange portion of rear pillar outer panel (rear portion of the outer panel)
62c main surface portion of outer panel of rear pillar
63 gutter panel
63a rear outer end flange portion of gutter panel (rear portion of gutter panel)
70 pillar duct portion
71 front opening
72 rear opening
73 duct body
80a side parting line (parting line)
α47, α47' rear throttle angle of outer surface of wing-like portion in horizontal cross section
α62 rear throttle angle of outer surface of outer panel of rear pillar in horizontal cross section

## Claims

1. A body rear structure comprising:
• a lid body (4) that openably/closably covers a body rear surface opening (2A);
• a rear pillar (6), in which a rear end portion is adjacent to each of left and right edge portions of the lid body via a parting line, and which forms a part of a body side surface portion;
• a pillar duct portion (70) that introduces and discharges a travel wind, which flows along a quarter window (15) provided in the body side surface portion located on a front side of the rear pillar, to rear of the rear pillar; and
• a side spoiler (45) that is fixed to an outer surface of each of the left and right edge portions of the lid body,
wherein, in the rear pillar (6), an inner panel (61), an outer panel (62) whose main surface portion is located on an outer side in a vehicle width direction of a rear end portion of the quarter window, and a gutter panel (63) forming a rain gutter in each of left and right side portions of the body rear surface opening are joined to form a closed cross-sectional portion that extends along respective one of the edge portions of the lid body,
the pillar duct portion (70) includes:
• a front opening (71) that is opened to be oriented to front of a vehicle in a front edge portion of the outer panel;
• a rear opening (72) that is opened to be oriented to the rear of the vehicle in a rear portion of the outer panel or the gutter panel; and
• a duct body (73) that connects these front and rear openings and extends the closed cross-sectional portion of the rear pillar in a front-rear direction, **characterised in that**, the side spoiler (45) includes a wing-like portion (47) having an outer surface that smoothly continues from a rear end portion of an outer surface of the outer panel via the parting line on a vehicle width outer side of a flow path, through which a discharge wind from the pillar duct portion flows.

2. The body rear structure according to claim 1, wherein the outer surface of the wing-like portion (47) is provided to smoothly continue rearward from the rear end portion of the outer surface of the outer panel constituting a part of the body side surface portion, and is formed to have a larger rear throttle angle than a rear throttle angle of the outer surface of the outer panel in a horizontal cross section.

3. The body rear structure according to claim 2, wherein the rear throttle angle of the wing-like portion (47) is set within a range of 25 degrees or greater and 29 degrees or less.

4. The body rear structure according to claim 1, wherein the pillar duct portion (70) is structured to enhance the ejector effect by optimizing the cross-sectional area of the duct body (73), allowing for a controlled acceleration of the travel wind from the front opening (71) to the rear opening (72). This configuration effectively reduces air turbulence and drag at the rear of the vehicle, improving aerodynamic efficiency and stability during high-speed travel.

5. The body rear structure according to claim 1, wherein the side spoiler (45) is further configured with aerodynamic fins on its outer surface to guide lateral wind flows towards the wing-like portion (47). These fins optimize airflow direction, enhancing the inward deflection of the post-side surface flow (W3r) during vehicle travel, thereby reducing drag and stabilizing the rear structure.

6. The body rear structure according to claim 1, wherein the duct body (73) of the pillar duct portion (70) includes a multi-layered flow channel design. This design allows the travel wind to pass through separate upper and lower channels that converge at the rear opening (72), stabilizing the discharge flow and enhancing aerodynamic efficiency.

7. The body rear structure according to claim 1, wherein the outer surface of the wing-like portion (47) is coated with a low-friction surface treatment. This coating minimizes air resistance and maintains smooth airflow continuity from the rear pillar (6) to the side spoiler (45), effectively reducing drag during vehicle travel.

8. The body rear structure according to claim 1, wherein the gutter panel (63) that forms the rain gutter in the side portions of the body rear surface opening is additionally designed to channel rainwater away from the pillar duct portion (70). This design prevents moisture buildup and preserves aerodynamic efficiency by maintaining clear airflow channels during adverse weather conditions.

9. The body rear structure according to claim 1, wherein the connection between the front opening (71) and rear opening (72) of the pillar duct portion (70) is optimized with a gradually narrowing conduit design. This narrowing enhances the acceleration of the travel wind as it exits the rear opening (72), contributing to greater inward deflection of the post-side surface flow (W3r), improving aerodynamic stability and reducing drag.

10. The body rear structure according to claim 1, wherein the rear throttle angle (α47) of the wing-like portion (47) is dynamically adjustable based on vehicle speed. This adjustment enables real-time optimization of airflow and reduction of drag through an active aerodynamic control system integrated with vehicle sensors, maintaining optimal aerodynamic performance at varying speeds.

## Patentansprüche

1. Karosserieheckstruktur, umfassend:
• einen Deckelkörper (4), der eine Karosserieheckflächenöffnung (2A) öffenbar/schließbar abdeckt;
• eine Hecksäule (6), bei der ein hinterer Endabschnitt jeweils an einen linken und rechten Randabschnitt des Deckelkörpers über eine Trennlinie angrenzt und die einen Teil eines Karosserieseitenflächenabschnitts bildet;
• einen Säulenkanalabschnitt (70), der einen Fahrtwind, der entlang eines Dreiecksfensters (15) strömt, das in dem auf einer Vorderseite der Hecksäule gelegenen Karosserieseitenflächenabschnitt vorgesehen ist, zur Rückseite der Hecksäule einleitet und ausbläst; und
• einen Seitenspoiler (45), der an einer Außenfläche jeweils des linken und rechten Randabschnitts des Deckelkörpers befestigt ist,
wobei in der Hecksäule (6) ein Innenblech (61), ein Außenblech (62), dessen Hauptflächenabschnitt auf einer Außenseite in einer Fahrzeugbreitenrichtung eines hinteren Endabschnitts des Dreiecksfensters angeordnet ist, und ein Rinnenblech (63), das eine Regenrinne in jedem von linken und rechten Seitenabschnitten der Karosserieheckflächenöffnung bildet, verbunden sind, um einen geschlossenen Querschnittsabschnitt zu bilden, der sich entlang eines jeweiligen der Randabschnitte des Deckelkörpers erstreckt,
der Säulenkanalabschnitt (70) umfasst:
• eine vordere Öffnung (71), die geöffnet ist, um in einem vorderen Randabschnitt des Außenblechs zur Vorderseite eines Fahrzeugs ausgerichtet zu sein;
• eine hintere Öffnung (72), die geöffnet ist, um in einem hinteren Abschnitt des Außenblechs oder des Rinnenblechs zur Rückseite des Fahrzeugs ausgerichtet zu sein; und
• einen Kanalkörper (73), der diese vordere und hintere Öffnung verbindet und den geschlossenen Querschnittsabschnitt der Hecksäule in einer Vorne-Hinten-Richtung erweitert,
**dadurch gekennzeichnet, dass**
der Seitenspoiler (45) einen flügelartigen Abschnitt (47) mit einer Außenfläche aufweist, die sich von einem hinteren Endabschnitt einer Außenfläche des Außenblechs über die Trennlinie auf einer Außenseite in Fahrzeugbreitenrichtung eines Strömungspfads, durch den ein Ausblaswind aus dem Säulenkanalabschnitt strömt, stetig fortsetzt.

2. Karosserieheckstruktur nach Anspruch 1, wobei die Außenfläche des flügelartigen Abschnitts (47) so vorgesehen ist, dass sie sich von dem hinteren Endabschnitt der Außenfläche des Außenblechs, das einen Teil des Karosserieseitenflächenabschnitts bildet, stetig nach hinten fortsetzt, und so ausgebildet ist, dass sie in einem horizontalen Querschnitt einen größeren hinteren Drosselwinkel als ein hinterer Drosselwinkel der Außenfläche des Außenblechs aufweist.

3. Karosserieheckstruktur nach Anspruch 2, wobei der hintere Drosselwinkel des flügelartigen Abschnitts (47) innerhalb eines Bereichs von 25 Grad oder mehr und 29 Grad oder weniger eingestellt ist.

4. Karosserieheckstruktur nach Anspruch 1, wobei der Säulenkanalabschnitt (70) so aufgebaut ist, dass er den Ejektoreffekt durch Optimieren der Querschnittsfläche des Kanalkörpers (73) verstärkt, was eine gesteuerte Beschleunigung des Fahrtwinds von der vorderen Öffnung (71) zu der hinteren Öffnung (72) ermöglicht. Diese Konfiguration reduziert effektiv Luftturbulenzen und Luftwiderstand am Heck des Fahrzeugs, wodurch die aerodynamische Effizienz und Stabilität während der Hochgeschwindigkeitsfahrt verbessert werden.

5. Karosserieheckstruktur nach Anspruch 1, wobei der Seitenspoiler (45) ferner mit aerodynamischen Finnen an seiner Außenfläche konfiguriert ist, um seitliche Windströmungen zu dem flügelartigen Abschnitt (47) zu leiten. Diese Finnen optimieren die Luftströmungsrichtung, wodurch die Einwärtsauslenkung der Nachseitenflächenströmung (W3r) während der Fahrzeugfahrt verstärkt wird, wodurch der Luftwiderstand verringert und die Heckstruktur stabilisiert wird.

6. Karosserieheckstruktur nach Anspruch 1, wobei der Kanalkörper (73) des Säulenkanalabschnitts (70) eine mehrlagige Strömungskanalgestaltung umfasst. Diese Gestaltung ermöglicht es dem Fahrtwind, durch separate obere und untere Kanäle zu strömen, die an der hinteren Öffnung (72) zusammenlaufen, wodurch die Ausblasströmung stabilisiert und die aerodynamische Effizienz verbessert wird.

7. Karosserieheckstruktur nach Anspruch 1, wobei die Außenfläche des flügelartigen Abschnitts (47) mit einer reibungsarmen Oberflächenbehandlung beschichtet ist. Diese Beschichtung minimiert den Luftwiderstand und hält eine stetige Luftströmungskontinuität von der Hecksäule (6) zu dem Seitenspoiler (45) aufrecht, wodurch der Luftwiderstand während der Fahrzeugfahrt effektiv verringert wird.

8. Karosserieheckstruktur nach Anspruch 1, wobei das Rinnenblech (63), das die Regenrinne in den Seitenabschnitten der Karosserieheckflächenöffnung bildet, zusätzlich so ausgelegt ist, dass es Regenwasser von dem Säulenkanalabschnitt (70) wegleitet. Diese Auslegung verhindert eine Feuchtigkeitsansammlung und bewahrt die aerodynamische Effizienz durch Aufrechterhalten freier Luftströmungskanäle während widriger Wetterbedingungen.

9. Karosserieheckstruktur nach Anspruch 1, wobei die Verbindung zwischen der vorderen Öffnung (71) und der hinteren Öffnung (72) des Säulenkanalabschnitts (70) mit einer sich allmählich verengenden Leitungsgestaltung optimiert ist. Diese Verengung verstärkt die Beschleunigung des Fahrtwinds beim Austritt aus der hinteren Öffnung (72), was zu einer größeren Einwärtsauslenkung der Nachseitenflächenströmung (W3r) beiträgt, die aerodynamische Stabilität verbessert und den Luftwiderstand verringert.

10. Karosserieheckstruktur nach Anspruch 1, wobei der hintere Drosselwinkel (α47) des flügelartigen Abschnitts (47) basierend auf der Fahrzeuggeschwindigkeit dynamisch einstellbar ist. Diese Einstellung ermöglicht eine Echtzeit-Optimierung der Luftströmung und eine Verringerung des Luftwiderstands durch ein aktives aerodynamisches Steuerungssystem, das mit Fahrzeugsensoren integriert ist, wodurch eine optimale aerodynamische Leistung bei unterschiedlichen Geschwindigkeiten aufrechterhalten wird.

## Revendications

1. Structure arrière de carrosserie comprenant :
• un corps de couvercle (4) qui recouvre de manière ouvrable/fermable une ouverture de surface arrière de carrosserie (2A);
• un montant arrière (6), dans lequel une partie d'extrémité arrière est adjacente à chacune de parties de bord gauche et droite du corps de couvercle par l'intermédiaire d'une ligne de joint, et qui forme une partie d'une partie de surface latérale de carrosserie;
• une partie de conduit de montant (70) qui introduit et évacue un vent de déplacement, qui s'écoule le long d'une custode (15) prévue dans la partie de surface latérale de carrosserie située sur un côté avant du montant arrière, vers l'arrière du montant arrière; et
• un becquet latéral (45) qui est fixé à une surface extérieure de chacune des parties de bord gauche et droite du corps de couvercle,
dans laquelle, dans le montant arrière (6), un panneau intérieur (61), un panneau extérieur (62) dont une partie de surface principale est située sur un côté extérieur dans une direction de largeur de véhicule d'une partie d'extrémité arrière de la custode, et un panneau de gouttière (63) formant une gouttière d'eau de pluie dans chacune de parties latérales gauche et droite de l'ouverture de surface arrière de carrosserie sont assemblés pour former une partie de section transversale fermée qui s'étend le long d'une respective des parties de bord du corps de couvercle,
la partie de conduit de montant (70) comprend:
• une ouverture avant (71) qui est ouverte pour être orientée vers l'avant d'un véhicule dans une partie de bord avant du panneau extérieur;
• une ouverture arrière (72) qui est ouverte pour être orientée vers l'arrière du véhicule dans une partie arrière du panneau extérieur ou du panneau de gouttière; et
• un corps de conduit (73) qui relie ces ouvertures avant et arrière et prolonge la partie de section transversale fermée du montant arrière dans une direction avant-arrière,
**caractérisée en ce que**,
le becquet latéral (45) comprend une partie en forme d'aile (47) présentant une surface extérieure qui continue de manière fluide depuis une partie d'extrémité arrière d'une surface extérieure du panneau extérieur par l'intermédiaire de la ligne de joint sur un côté extérieur en largeur de véhicule d'un trajet d'écoulement, à travers lequel s'écoule un vent d'évacuation depuis la partie de conduit de montant.

2. Structure arrière de carrosserie selon la revendication 1, dans laquelle la surface extérieure de la partie en forme d'aile (47) est prévue pour continuer de manière fluide vers l'arrière depuis la partie d'extrémité arrière de la surface extérieure du panneau extérieur constituant une partie de la partie de surface latérale de carrosserie, et est formée pour présenter un angle d'étranglement arrière plus grand qu'un angle d'étranglement arrière de la surface extérieure du panneau extérieur dans une section transversale horizontale.

3. Structure arrière de carrosserie selon la revendication 2, dans laquelle l'angle d'étranglement arrière de la partie en forme d'aile (47) est réglé dans une plage de 25 degrés ou plus et de 29 degrés ou moins.

4. Structure arrière de carrosserie selon la revendication 1, dans laquelle la partie de conduit de montant (70) est structurée pour améliorer l'effet éjecteur en optimisant l'aire de section transversale du corps de conduit (73), permettant une accélération régulée du vent de déplacement depuis l'ouverture avant (71) jusqu'à l'ouverture arrière (72). Cette configuration réduit efficacement la turbulence de l'air et la traînée à l'arrière du véhicule, améliorant l'efficacité et la stabilité aérodynamiques pendant un déplacement à grande vitesse.

5. Structure arrière de carrosserie selon la revendication 1, dans laquelle le becquet latéral (45) est en outre configuré avec des ailettes aérodynamiques sur sa surface extérieure pour guider des écoulements de vent latéral vers la partie en forme d'aile (47). Ces ailettes optimisent la direction d'écoulement d'air, améliorant la déviation vers l'intérieur de l'écoulement de surface post-latérale (W3r) pendant le déplacement du véhicule, réduisant ainsi la traînée et stabilisant la structure arrière.

6. Structure arrière de carrosserie selon la revendication 1, dans laquelle le corps de conduit (73) de la partie de conduit de montant (70) comprend une conception de canal d'écoulement multicouche. Cette conception permet au vent de déplacement de traverser des canaux supérieur et inférieur séparés qui convergent au niveau de l'ouverture arrière (72), stabilisant l'écoulement d'évacuation et améliorant l'efficacité aérodynamique.

7. Structure arrière de carrosserie selon la revendication 1, dans laquelle la surface extérieure de la partie en forme d'aile (47) est revêtue d'un traitement de surface à faible frottement. Ce revêtement minimise la résistance de l'air et maintient une continuité d'écoulement d'air fluide depuis le montant arrière (6) jusqu'au becquet latéral (45), réduisant efficacement la traînée pendant le déplacement du véhicule.

8. Structure arrière de carrosserie selon la revendication 1, dans laquelle le panneau de gouttière (63) qui forme la gouttière d'eau de pluie dans les parties latérales de l'ouverture de surface arrière de carrosserie est en outre conçu pour canaliser l'eau de pluie à l'écart de la partie de conduit de montant (70). Cette conception empêche l'accumulation d'humidité et préserve l'efficacité aérodynamique en maintenant des canaux d'écoulement d'air dégagés pendant des conditions météorologiques défavorables.

9. Structure arrière de carrosserie selon la revendication 1, dans laquelle la liaison entre l'ouverture avant (71) et l'ouverture arrière (72) de la partie de conduit de montant (70) est optimisée avec une conception de conduit se rétrécissant progressivement. Ce rétrécissement améliore l'accélération du vent de déplacement lorsqu'il sort de l'ouverture arrière (72), contribuant à une plus grande déviation vers l'intérieur de l'écoulement de surface post-latérale (W3r), améliorant la stabilité aérodynamique et réduisant la traînée.

10. Structure arrière de carrosserie selon la revendication 1, dans laquelle l'angle d'étranglement arrière (α47) de la partie en forme d'aile (47) est ajustable dynamiquement sur la base de la vitesse de véhicule. Cet ajustement permet une optimisation en temps réel de l'écoulement d'air et une réduction de la traînée par l'intermédiaire d'un système de commande aérodynamique active intégré avec des capteurs de véhicule, maintenant des performances aérodynamiques optimales à des vitesses variables.
